# EUROPÄISCHE PATENTSCHRIFT

(11) **EP 3 330 456 B1**
(45) Veröffentlichungstag und Bekanntmachung des Hinweises auf die Patenterteilung: **30.10.2019**
(21) Anmeldenummer: 17200812.0
(22) Anmeldetag: 09.11.2017
(51) Int. Cl.: E04F 15/20, E04F 15/18, B32B 3/28

(54) **ENTKOPPLUNGSMATTE**
DECOUPLING MAT
NATTE DE DÉCOUPLAGE

(30) Priorität: 01.12.2016 DE 102016123211
(43) Veröffentlichungstag der Anmeldung: 06.06.2018
(73) Patentinhaber: Gebrüder Jaeger GmbH, 42369 Wuppertal (DE)
(72) Erfinder: Rittmann, Frank, 42289 Wuppertal (DE)
(74) Vertreter: Müller, Enno

(56) Entgegenhaltungen:
- EP-A2- 1 607 544
- WO-A1-2010/105857
- DE-U1- 29 622 129
- DE-U1-202009 003 690

## Beschreibung

### Gebiet der Technik

Die Erfindung betrifft eine zur Verlegung unter keramischen Belägen ausgebildete Entkopplungsmatte nach den Merkmalen des Oberbegriffs des Anspruches 1.

### Stand der Technik

Derartige Entkopplungsmatten, die auch als Trägermatten bezeichnet werden, sind bereits in verschiedener Hinsicht bekannt geworden. Diese dienen beispielsweise im Zusammenhang mit einer Verlegung von keramischen Belägen, wie vorzugsweise Fliesen, im Dünnbettverfahren.

Zum Stand der Technik wird bspw. auf die DE 20 2009 003 690 U1 verwiesen. Hieraus ist es bekannt, einseitig offene Näpfe der Entkopplungsmatte mit einem Gemisch aus Quarzsand oder dergleichen und einem Bindemittel zu füllen. Weiter ist eine Entkopplungsmatte auch aus der WO 2010/105857 A1 bekannt.

Aus der DE 20 2009 003 690 U1 ist es nur bekannt, bei einer Entkopplungsmatte Näpfe in Form von gefüllten Stützfüßen auszubilden. Die Kunststofflage als solche ist nicht eigenstabil. Vergleichbares ist auch aus der WO 2010/105857 A1 bekannt.

Bei einer aus der EP 1 607 554 A2 bekannten Entkopplungsmatte ist lediglich eine Trägerfolie mit aufgebrachten Rippen ausgebildet. Aus der DE 296 22 129 U1 ist eine Entkopplungsmatte bekannt, die nur einseitig mit einer Vlieslage beschichtet ist. Bei bodenseitigem Einbau der Vlieslage weisen die Näpfe im Einbauzustand mit ihrer Öffnung nach unten.

### Zusammenfassung der Erfindung

Ausgehend von dem dargelegten genannten Stand der Technik beschäftigt sich die Erfindung mit der Aufgabenstellung, eine Entkopplungsmatte der genannten Art in vorteilhafter Weise auszubilden.

Diese Aufgabe wird durch den Gegenstand des Anspruches 1 gelöst.

Eine derart ausgebildete Entkopplungsmatte ist einfach und günstig herstellbar, dies bei einfacher Anwendung. Hierbei erfüllt die Entkopplungsmatte die grundsätzlich an eine solche Entkopplungsmatte gestellten Anforderungen, insbesondere hinsichtlich Entkopplung und Abdichtung, ggf. auch hinsichtlich Trittschalldämmung.

Geeignete Vliese sind bspw. thermisch gebundene Vliese, chemisch gebundene Vliese, genadelte Vliese oder wasserstrahlgebundene Vliese. Desgleichen kann auch eine Kombination von Vlies und verstärkter Textillage zur Anwendung kommen.

Die Vliesfasern können aus bspw. Polypropylen oder Polyethylen bestehen, darüber hinaus auch Polyester.

Die oberseitige Deck- beziehungsweise Abschlusslage, gegebenenfalls aber auch die untere Abschlusslage, kann auch wasser- und/oder dampfdicht ausgebildet sein. Im Falle eines Vlieses kann eine hydrophobe Einstellung des Vlieses vorgenommen sein. Hierdurch kann jedenfalls erreicht sein, dass keine Durchlässigkeit für Wasser gegeben ist.

Die durchgehende, einseitig offene Näpfe aufweisende Kunststofflage kann aus bspw. Polypropylen oder Polyethylen oder auch aus einem Copolymer aus Ethylen und Vinylacetat bestehen.

Die Vliese bzw. Deck- und/oder Abschlusslagen können mit den zugewandten Flächenabschnitten der Kunststofflage verklebt sein. Alternativ ist diesbezüglich eine Verbindung bspw. durch Laminieren oder Verschmelzen mit der noch weichen Polymermasse möglich.

Die Kunststofflage ist mit einer solchen Dicke - gemessen in einem Querschnitt quer zur Flächenerstreckung der Kunststofflage - und Festigkeit versehen, welche die Anwendung der Kunststofflage ohne eine Verfüllung der durch die möglichen Näpfe umfassten Freiräume erlaubt. Dies führt zu einer vereinfachten Herstellung der Entkopplungsmatte, darüber hinaus zu einer Gewichtseinsparung. Des Weiteren bedarf es gemäß einer möglichen Anwendung keiner Verfüllung der Zwischenräume mit Dünnbettmörtel, um (erst) hierdurch eine ausreichende Stabilität zu erzielen.

Die Näpfe oder Noppen belassen zwischen sich eine insgesamt gitterartige Freiraum-Struktur, die bevorzugt hin zu den Randbereichen der Entkopplungsmatte offen ausläuft. So kann bei Nutzung der Entkopplungsmatte aufsteigende Feuchte zwischen der unmittelbar auf den freien Stirnflächen der Näpfe oder Noppen verhafteten, durchgehenden Abschlusslage und der offenen Struktur zur Seite hin abgeführt werden (Dampfdruck-Ausgleich). In Richtung auf die bodenseitig der Näpfe oder Noppen vorgesehene Decklage und somit in Nutzungssituation der Entkopplungsmatte in Richtung auf den aufgebrachten Dünnbettmörtel zur Festlegung von Fliesen oder dergleichen ist die Entkopplungsmatte wasser-, wie auch dampfdicht, so dass keine Feuchte in die Baustruktur eindringen kann. Die Wasser- und Dampfdichtigkeit kann allein durch das Material der Kunststofflage gegeben sein.

Die quer zur Flächenerstreckung der Entkopplungsmatte betrachtete Höhe der Näpfe bzw. Noppen ist bevorzugt geringer als 50 mm, weiter bevorzugt geringer als 25 mm und darüber hinaus auch bevorzugt geringer als 15 mm, so bspw. 4 oder 5 mm. Eine Mindestdicke des Kunststofflagen-Materials, die auch bevorzugt die Wandstärke der ggf. ausgebildeten Noppen angeben kann, kann bei 0,2 bis 1,1 mm gesehen werden. In einer möglichen Ausgestaltung kann eine Napf-Wandungsdicke größer sein als eine Napf-Bodendicke. So kann bei einer Wandungsdicke von beispielhaften 0,9 mm der Boden eine Dicke von bspw. 0,8 mm aufweisen.

Eine größte Breite, bspw., wie auch bevorzugt, ein Durchmesser eines Napfes oder einer Noppe kann bspw. 2 bis 20 mm betragen, weiter bspw. 5 bis 15 mm.

In einer möglichen Ausgestaltung können in einem Querschnitt die Wandungen eines Napfes zumindest annähernd in einem Winkel von etwa 90 Grad zu dem Napfboden verlaufen. Zur weiteren Erhöhung der Stabilität können die Näpfe in einem Querschnitt, in welchem die Kunststofflage zwischen der Decklage und der Abschlusslage erscheint, trapezförmig gestaltet sein. Die Napfwandung erstreckt sich hierbei unter Einschluss eines spitzen Winkels von bspw. mehr als 30 Grad, bevorzugt mehr als 45 Grad, beispielsweise 60 oder 75 Grad, bis hin zu annähernd 90 Grad, bspw. 85 oder 87 Grad zu dem Napfboden.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: einen Ausschnitt einer Entkopplungsmatte, teilweise hinsichtlich der Lagen aufgeklappt, in perspektivischer Ansicht;
- Fig. 2: eine Schnittdarstellung durch die Entkopplungsmatte, betreffend eine erste Ausführungsform;
- Fig. 3: eine der Figur 2 entsprechende Darstellung, eine zweite Ausführungsform betreffend;
- Fig. 4: eine weitere der Figur 2 entsprechende Darstellung, betreffend eine dritte Ausführungsform;
- Fig. 5: eine vierte Ausführungsform der Entkopplungsmatte in einer Darstellung gemäß Figur 2, keine Ausführungsform gemäß der Erfindung.

### Beschreibung der Ausführungsformen

Dargestellt und beschrieben ist eine Entkopplungsmatte 1, die beim Ausführungsbeispiel aus einer Kunststofflage 2 besteht, in welcher, beispielsweise durch Tiefziehen, Näpfe 3 ausgeformt sind. Auch kann die bspw. 2 mm dicke Kunststofflage 2 auf einer Walze mit entsprechenden Hohlräumen gefertigt werden, wobei zufolge Vakuumbeaufschlagung das Material in die Näpfchenform der Walze gezogen wird.

Die Wandstärke der Näpfe 3 ist einstellbar.

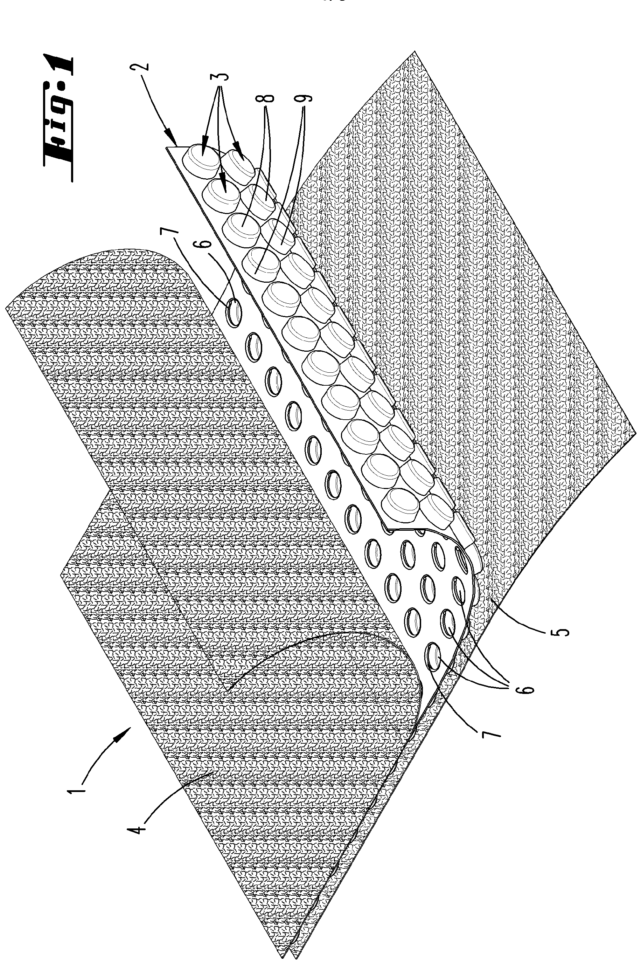

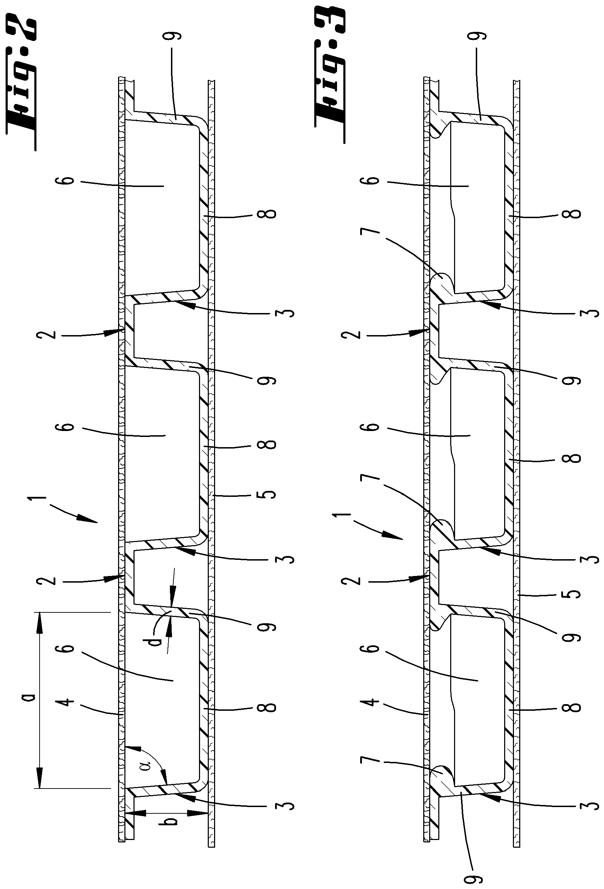

Die Näpfe 3 sind von einer in Figur 1 teilweise aufgeklappt dargestellten Decklage 4 überdeckt. Die einen ungefüllten Freiraum 6 begrenzenden Näpfe 3 sind durch die Decklage 4 verschlossen. Die Napföffnungen weisen mit Bezug auf die Schnittdarstellung in Figur 2 bzw. 3 nach oben, gerichtet in Richtung auf einen auf der Entkopplungsmatte 1 aufzubringenden Bodenbelag.

Weiter mit Bezug zu der Schnittdarstellung in Figur 2 bzw. 3 ist als unterste Lage auf den freien Stirnflächen der Näpfe 3 aufliegend eine Abschlusslage 5 ausgebildet.

Decklage 4 und Abschlusslage 5 können, wie auch bevorzugt, als Vlieslage ausgebildet sein. Es kann sich bspw. hierbei auch um eine Gewebelage handeln.

Decklage 4 und Abschlusslage 5 sind durchgehend ausgebildet, entsprechend jeweils die Kunststofflage 2 in ihrer Flächenerstreckung vollständig überdeckend.

Es ist jeweils eine Verhaftung zwischen Decklage 4 und Kunststofflage 2 bzw. Abschlusslage 5 und Kunststofflage 2 vorgesehen, bspw. zufolge einer Verklebung oder Laminierung. Die Decklage 4 ist hierbei verhaftet mit sich in der Ebene der Napföffnungen erstreckenden Kunststofflagenabschnitten. Die Abschlusslage 5 ist verhaftet mit den freien Stirnflächen der Näpfe 3.

Zwischen den Näpfen 3 ergibt sich eine in der Nutzungsstellung gemäß den Schnittdarstellungen in den Figuren 2 und 3 nach unten offene Struktur, über welche aufsteigende und die untere Abschlusslage 5 durchdringende Feuchtigkeit zur Seite hin abgeführt werden kann. Nach oben hin in Richtung auf den aufzubringenden Bodenbelag ist die Konstruktion wasser- und auch dampfdicht, so dass keine Feuchtigkeit in die Baustruktur eindringen kann.

Die Kunststofflage 2 kann ausgehend von einer Kunststofffolie gebildete sein, bspw. einer Folie mit einer Dicke d von 0,2 bis 2 mm.

Die Näpfe 3 können kreiszylindrisch ausgebildet sein, mit einem beispielhaften Durchmesser a von 5 bis 20 mm, weiter bspw. etwa 10 mm und einer Zylinderhöhe b quer zur Flächenerstreckung der Kunststofflage 2 von bspw. 2,5 bis 7,5 mm, weiter bspw. etwa 4 oder 5 mm.

Die Wandstärke eines Napfes 3 kann im Wesentlichen der Dicke d der Kunststofflage 2 entsprechen.

In Richtung der Flächenerstreckung der Kunststofflage 2 können die Näpfe 3 gleichmäßig zueinander beabstandet vorgesehen sein, hierbei einen Abstand zwischen den Zylinderachsen zweier benachbarter Näpfe 3 einnehmend, welcher Abstand etwa dem 1,1- bis 1,5-Fachen des Durchmessers a eines Napfes 3 entspricht.

Durch die gegebenen Abmessungen und Wandstärken bzw. durch die gegebene Dicke d der Kunststofflage 2 ist eine erforderliche Stabilität der mit ungefüllten Näpfen 3 versehenen Entkopplungsmatte 1 gegeben.

Diese Stabilität kann gemäß der Darstellung in Figur 3 in weiterer Ausführungsform erhöht sein durch einen im Bereich der Napföffnung mit Bezug auf die Zylinderachse des Napfes 3 umlaufenden und nach radial innen in den Freiraum 6 einragenden Wulst 7, der materialeinheitlich und einstückig mit der Napfwandung und insgesamt mit der Kunststofflage 2 ausgebildet ist.

Der Napfboden 8 erstreckt sich in einem Querschnitt bspw. gemäß der Darstellungen in den Figuren 2 oder 3 annähernd in Parallelausrichtung zu der an dem Napfboden 8 befestigten Abschlusslage 5.

Die sich im Wesentlichen zwischen Abschlusslage 5 und Decklage 4 erstreckenden Napfwandungen 9 schließen in dem Querschnitt zum anschließenden Napfboden 8 einen spitzen Winkel α ein, der gemäß den Ausführungsformen in den Figuren 2 und 3 annähernd 90 Grad, so bspw. etwa 80 bis 85 Grad betragen kann.

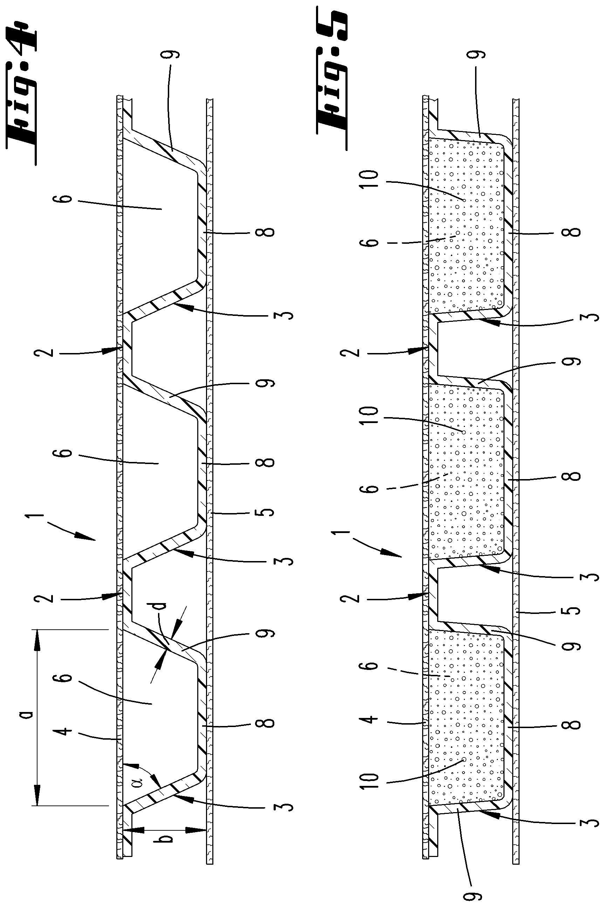

Auch kann gemäß der Ausführungsform in Figur 4 zwischen Napfwandung 9 und Napfboden 8 ein spitzer Winkel α von etwa 60 bis 75 Grad eingeschlossen sein, so dass sich insgesamt eine trapezförmige Napfausgestaltung einstellt.

In weiterer alternativer Ausgestaltung, welche nicht Gegenstand der Erfindung ist, kann der Freiraum 6 bspw. mit einem Anti-Schimmel-Mittel 10 gefüllt sein (vgl. Figur 5).

## Patentansprüche

1. Entkopplungsmatte (1) mit einer beispielsweise durch Tiefziehen hergestellten, einseitig offene Näpfe (3) aufweisenden, durchgehenden Kunststofflage (2) und einer bodenseitig der Näpfe (3), die Näpfe (3) hierbei verschließenden, auf der Kunststofflage (2) aufgebrachten durchgehenden Decklage (4), wobei die Näpfe (3) jeweils einen inneren Freiraum (6) begrenzen und die Decklage (4), wie auch eine auf freien Stirnflächen der Näpfe (3) unmittelbar verhaftete durchgehende Abschlusslage (5), jeweils aus einem Vlies bestehen,
**dadurch gekennzeichnet, dass** die durch die Näpfe begrenzten inneren Freiräume ungefüllt sind, wobei die Kunststofflage (2), gemessen in einem Querschnitt zur Flächenerstreckung der Kunststofflage mit einer solchen Dicke (d) und Festigkeit, sowie die Näpfe (3) mit einer solchen Abmessung und Wandstärke ausgebildet sind, dass sich eine erforderliche Stabilität ergibt, welche eine Verlegung der Entkopplungsmatte (1) unter keramischen Bodenbelägen ohne eine Verfüllung der durch die Näpfe (3) umfassten Freiräume (6) erlaubt, wobei die Napföffnungen mit Bezug auf eine Schnittdarstellung nach oben, gerichtet in Richtung auf den auf der Entkopplungsmatte (1) aufzubringenden Bodenbelag weisen.

2. Entkopplungsmatte nach dem vorhergehenden Anspruch, wobei die Näpfe (3) in einem Querschnitt, in welchem die Kunststofflage (2) zwischen der Decklage (4) und der Abschlusslage (5) erscheint, trapezförmig gestaltet sind.

## Claims

1. Decoupling mat (1) comprising a continuous plastics layer (2) which is produced, for example, by deep drawing and comprises wells (3) which are open on one side, and a continuous cover layer (4) which is applied to the plastics layer (2), on the base of the wells (3), so as to seal the wells (3), the wells (3) in each case delimiting an inner free space (6) and the cover layer (4) as well as a continuous final layer (5) which is directly adhered to free end faces of the wells (3) each consisting of a non-woven fabric, **characterised in that** the inner free spaces delimited by the wells are unfilled, the plastics layer (2), measured in a cross section with respect to the surface extension of the plastics layer, being designed so as to have a thickness (d) and strength and the wells (3) being designed so as to have a dimension and wall thickness such that a required stability is produced which allows the decoupling mat (1) to be laid under ceramic floor coverings without backfilling of the free spaces (6) enclosed by the wells (3), the well openings facing upward, with reference to a sectional view, and being directed towards the floor covering to be applied on the decoupling mat (1).

2. Decoupling mat according to the preceding claim, wherein, in a cross section in which the plastics layer (2) appears between the cover layer (4) and the final layer (5), the wells (3) are trapezoidal.

## Revendications

1. Natte de découplage (1), comprenant une couche de matière plastique continue (2) présentant des godets (3) ouverts sur un côté et obtenus par exemple par emboutissage, et une couche de couverture continue (4) qui est appliquée sur la couche de matière plastique (2) sur le côté inférieur des godets et fermant ce faisant les godets (3), dans laquelle les godets (3) délimitent chacun un espace libre intérieur (6) et la couche de couverture (4), ainsi qu'une couche terminale continue (5) directement collée sur des surfaces frontales libres des godets (3), sont constituées chacune par un non-tissé, **caractérisée en ce que** les espaces libres intérieurs délimités par les godets ne sont pas remplis, la couche de matière plastique (2), mesurée en section transversale par rapport à l'extension surfacique de la couche de matière plastique, étant formée avec une épaisseur (d) et une résistance telles, ainsi que les godets (3) avec une dimension et une épaisseur de paroi telles qu'il en résulte une stabilité requise permettant la pose de la natte de découplage (1) sous des revêtements de sol céramiques sans comblement des espaces libres (6) délimités par les godets (3), les ouvertures des godets pointant, en référence à une vue en coupe, vers le haut dans la direction du revêtement de sol à appliquer sur la natte de découplage (1).

2. Natte de découplage selon la revendication précédente, dans laquelle, dans une section transversale dans laquelle la couche de matière plastique (2) apparaît entre la couche de couverture (4) et la couche terminale (5), les godets (3) sont de forme trapézoïdale.
